# EUROPEAN PATENT SPECIFICATION

(11) **EP 4 057 517 B1**
(45) Date of publication and mention of the grant of the patent: **21.08.2024**
(21) Application number: 19958283.4
(22) Date of filing: 30.12.2019
(51) Int. Cl.: H04B 1/40, H01Q 1/24, H01Q 3/36, H01Q 21/00, H01Q 21/06, H04B 7/04

(54) **ANTENNA TRANSCEIVER MODULE, MULTI-INPUT MULTI-OUTPUT ANTENNA TRANSCEIVER SYSTEM, AND BASE STATION**
ANTENNEN-SENDEEMPFÄNGERMODUL, MIMO-ANTENNEN-SENDEEMPFÄNGERSYSTEM UND BASISSTATION
MODULE ÉMETTEUR-RÉCEPTEUR D'ANTENNE, SYSTÈME ÉMETTEUR-RÉCEPTEUR D'ANTENNE À ENTRÉES ET SORTIES MULTIPLES, ET STATION DE BASE

(43) Date of publication of application: 14.09.2022
(73) Proprietor: Huawei Technologies Co., Ltd., Shenzhen, Guangdong 518129 (CN)
(72) Inventor: WANG, Yanchun, Shenzhen, Guangdong 518129 (CN); JIN, Tao, Shenzhen, Guangdong 518129 (CN); CHEN, Wei, Shenzhen, Guangdong 518129 (CN); XUE, Chunlin, Shenzhen, Guangdong 518129 (CN)
(74) Representative: MERH-IP Matias Erny Reichl Hoffmann Patentanwälte PartG mbB
(86) International application number: PCT/CN2019/130206
(87) International publication number: WO 2021/134366

(56) References cited:
- EP-A1- 3 068 060
- WO-A1-01/35608
- CN-A- 102 377 440
- CN-A- 102 396 163
- CN-A- 105 656 508
- CN-A- 105 703 053
- US-A- 4 791 421
- US-A- 5 027 125
- US-A1- 2017 085 005

## Description

### TECHNICAL FIELD

This application relates to the field of communications device technologies, and in particular to an antenna transceiver module, a multiple-input multiple-output antenna transceiver system, and a base station.

### BACKGROUND

In a time division duplexing (time division duplexing, TDD) system, to obtain required information, user equipment (user equipment, UE) first sends a sounding reference signal (sounding reference signal, SRS) to a base station through an uplink channel. The base station performs channel quality estimation on the uplink channel corresponding to the SRS, selects an optimal downlink channel based on channel heterogeneity, and uses the optimal downlink channel to transmit the required information to the user equipment.

To ensure downlink performance of the base station, channel quality estimation duration needs to be shortened, to improve a response speed of obtaining the required information for the user equipment. As SRS resources become increasingly insufficient, SRS resources need to be fully utilized. In addition, how to ensure a downlink coverage capability of the base station with controlled base station cost is also an urgent problem to be resolved.

US 5,027,125 shows a module disposed at each radiating element of a phased array antenna, the module having a limiter, a low-noise amplifier and a phase shifter. One embodiment includes a DPDT switch to permit use of a common phase shifter on transmit and receive. On transmit, the DPDT switch is thrown in a position that connects the phase shifter directly to the radiating element. On receive, the DPDT switch is thrown in a position that connects the radiating element through the limiter and low noise amplifier and then to the phase shifter. Another embodiment uses a four-port circulator in place of the DPDT switch, and uses separate phase shifters for transmit and receive. A semi-active module for a constrained feed array uses both a DPDT switch and a circulator and uses a common transmit/receive phase shifter. A semi-active module for a space-fed array uses two DPDT switches, a single phaseshifter and limiter/low-noise amplifier and two antenna elements; one of receive, and one for retransmit. Another module employs a four-port circulator, separate transmit and receive phase shifters, and separate transmit and receive beamforming networks. In a monopulse radar transmitter, a module using a four-port circulator and a separate receive diode phase shifter, limiter and low-noise amplifier is used with a receive monopulse feed, transmit ferrite phase shifters and a transmit series feed.

US 4,791,421 shows a coupling module for use with phased-array antenna systems. The module includes separate phase shifters for the transmit and receive paths through the module. The transmit path also includes a power amplifier and the receive path includes a small signal, low noise amplifier. The two paths are coupled to the antenna radiating element by a transmit-receive switch or by a microwave circulator. A conducting septum is located between the devices in the transmit and receive paths to increase the isolation between the two paths. The individual phase shifters are optimized for unidirectional flow of comparatively large or small microwave signals and for the degree of desired phase shift resolution. Vector modulators may be used for the phase shift devices.

EP 3 068 060 A1 shows a wireless communication system. A method for transmitting a signal from a base station in a wireless communication system supporting multiuser-multiple input and multiple output (MU-MIMO) comprises the steps of: generating beams of subgroups including a plurality of terminals using analog beamforming; differentiating signals transmitted to each of the terminals using digital beamforming: and transmitting, to the terminals, signals generated based on analog beamforming and digital beamforming, wherein the weight of analog terminals, signals generated based on analog beamforming and digital beamforming, wherein the weight of analog beamforming may be determined based on channel state information obtained through an uplink reference signal.

### SUMMARY

Embodiments of this application provide, according to aspects of the invention, an antenna transceiver module, a multiple-input multiple-output antenna transceiver system, and a base station having the features of the independent claims, which ensures a downlink coverage capability of the base station with controlled base station cost, shortened channel quality estimation duration, and reduced SRS resources.

In the following, aspects and embodiments are described which are useful for understanding the invention.

According to a first aspect, some embodiments of this application provide an antenna transceiver module that includes a transmit chain and a plurality of receive chains. The transmit chain includes a main chain and a plurality of branch chains. The main chain has an input end and an output end. Each branch chain of the plurality of branch chains has an input end and at least one output end. The input ends of the plurality of branch chains are connected to the output end of the main chain. The output end of each branch chain is configured to connect to a duplexer. At least one branch chain of the plurality of branch chains includes a phase shifter. A quantity of the plurality of receive chains is equal to a quantity of all the output ends of the plurality of branch chains. Each receive chain of the plurality of receive chains has an input end and an output end. The input ends of the plurality of receive chains are in a one-to-one correspondence with all the output ends of the plurality of branch chains. The input end of each receive chain of the plurality of receive chains is configured to connect to the duplexer connected to the output end of the branch chain corresponding to the input end of the receive chain.

According to the antenna transceiver module provided in this embodiment of this application, the antenna transceiver module includes one transmit chain, where the transmit chain includes one main chain and the plurality of branch chains. The main chain has the input end and the output end. Each branch chain of the plurality of branch chains has the input end and at least one output end. The input ends of the plurality of branch chains are connected to the output end of the main chain. The output end of each branch chain is configured to connect to the duplexer and is connected to an antenna subarray through the duplexer. In this way, using one transmit chain to transmit signals to a plurality of antenna subarrays can reduce the quantity of transmit chains (that is, transmitters) disposed in a multiple-input multiple-output antenna transceiver system can be reduced and base station cost may be controlled. In addition, because at least one branch chain of the plurality of branch chains includes the phase shifter, sweeping of a narrow beam output by the multiple-input multiple-output antenna transceiver system can be implemented within a specific range by using the phase shifter, thereby ensuring a coverage capability of the base station. In addition, the antenna transceiver module includes the plurality of receive chains. A quantity of the plurality of receive chains is equal to a quantity of all the output ends of the plurality of branch chains. Each receive chain of the plurality of receive chains has an input end and an output end. The input ends of the plurality of receive chains are in a one-to-one correspondence with all the output ends of the plurality of branch chains. The input end of each receive chain of the plurality of receive chains is configured to connect to the duplexer connected to the output end of the branch chain corresponding to the input end of the receive chain. Therefore, received signals of all the duplexers may be obtained at a time through the plurality of receive chains, so that all SRSs within a coverage of the base station can be obtained at a time. In this way, channel quality estimation duration is shortened, and a response speed of obtaining required information by user equipment is improved. In addition, the user equipment needs to send an SRS to the base station only once through an uplink channel, thereby saving SRS resources and improving downlink performance of the base station.

The antenna transceiver module further includes a plurality of duplexers. A quantity of the plurality of duplexers is equal to the quantity of all the output ends of the plurality of branch chains, and the plurality of duplexers are in a one-to-one correspondence with all the output ends of the plurality of branch chains. Each duplexer of the plurality of duplexers includes a first end, a second end, and a third end, and the duplexer is configured to couple a signal input from the first end to the third end for output and couple a signal input from the third end to the second end for output. The first end of each duplexer of the plurality of duplexers is connected to an output end of a branch chain corresponding to the duplexer. The second end of each duplexer of the plurality of duplexers is connected to an input end of the receive chain corresponding to the output end of the branch chain corresponding to the duplexer. The third end of each duplexer of the plurality of duplexers is configured to connect to the antenna subarray.

Optionally, the duplexer includes but is not limited to a single-pole multi-throw switch, a circulator, or a filter. The antenna transceiver module further includes a plurality of antenna subarrays. A quantity of the plurality of antenna subarrays is equal to the quantity of the plurality of duplexers. The plurality of antenna subarrays are in a one-to-one correspondence with the plurality of duplexers. Each antenna subarray of the plurality of antenna subarrays includes at least two antennas, and each antenna subarray of the plurality of antenna subarrays is connected to a third end of the duplexer corresponding to the antenna subarray.

Optionally, each branch chain of the plurality of branch chains has one output end. In this way, a quantity of the plurality of branch chains is equal to the quantity of all the output ends of the plurality of branch chains. This structure is simple, and each antenna subarray can be separately controlled.

Optionally, each branch chain of the plurality of branch chains includes a phase shifter, or all branch chains except one branch chain of the plurality of branch chains include a phase shifter. In this way, the plurality of branch chains may separately perform phase adjustment on transmit signals. The adjustment flexibility is relatively high, and the coverage area of the base station can be enlarged.

Optionally, the plurality of antenna subarrays connected to all the output ends of the plurality of branch chains may be arranged in a row. In this way, sweeping of a narrow beam output by the multiple-input multiple-output antenna transceiver system can be implemented in an arrangement direction of the plurality of antenna subarrays.

Optionally, each branch chain of a plurality of branch chains includes a parent branch and a plurality of child branches. The parent branch and each child branch of the plurality of child branches each have an input end and an output end. The input end of the parent branch is the input end of the branch chain. The output end of the parent branch is connected to the input ends of the plurality of child branches, and the output end of the child branch is the output end of the branch chain. In this way, each branch chain of the plurality of branch chains has a plurality of output ends, and the quantity of the plurality of branch chains is less than the quantity of all the output ends of the plurality of branch chains, so that more antenna subarrays may be connected. On a premise that a quantity of antennas in a multiple-input multiple-output antenna system is fixed, a quantity of transmitters may be further reduced, which may further reduce the cost of the base station.

Optionally, each child branch of the plurality of child branches includes the phase shifter; or the parent branch includes a phase shifter, and all child branches except one of the plurality of child branches include a phase shifter. In this way, phase adjustment may be separately performed on a transmit signal output by each output end of all the output ends of the plurality of branch chains. The adjustment flexibility is relatively high, and the coverage area of the base station can be enlarged.

Optionally, a plurality of antenna subarrays connected to each branch chain of the plurality of branch chains are arranged into one antenna array along a first direction, the antenna arrays connected to the plurality of branch chains are arranged along a second direction, and the first direction is perpendicular to the second direction. In this way, sweeping of a narrow beam output by the multiple-input multiple-output antenna transceiver system can be implemented in both the first direction and the second direction.

Optionally, the transmit chain includes an up-conversion frequency mixer. The up-conversion frequency mixer is also referred to as a modulator. The up-conversion frequency mixer is configured to convert a frequency of a transmit signal transmitted through the transmit chain from a first frequency to a second frequency. The first frequency is lower than the second frequency.

Optionally, the main chain may include the up-conversion frequency mixer. In this way, transmit signals are transmitted to all output ends of the branch chains at the second frequency, a relatively small quantity of up-conversion frequency mixers are disposed in the transmit chain, and a cost of the antenna transceiver module is relatively low.

Optionally, each branch chain of the plurality of branch chains includes a power amplifier. When the branch chain includes the phase shifter, an input end of the power amplifier in the branch chain is connected to an output end of the phase shifter. In this way, in the branch chain, a transmit signal first passes through the phase shifter, and then passes through the power amplifier. The transmit signal is not affected by insertion loss of the phase shifter. In this way, on the premise that the transmit power is fixed, the strength of the transmit signal can be improved, and the downlink coverage capability of the base station can be improved; or, on the premise that the coverage capability of the base station is fixed, the transmit power of the transmit signal can be reduced, thereby reducing power consumption.

Optionally, each receive chain of the plurality of receive chains includes a down-conversion frequency mixer, also referred to as a demodulator. The down-conversion frequency mixer is configured to convert a frequency of a receive signal transmitted in the receive chain from a third frequency to a fourth frequency. The third frequency is higher than the fourth frequency.

Optionally, each receive chain of the receive chains further includes a low noise amplifier. The low noise amplifier can amplify a weak signal received by the antenna, and reduce noise interference in a signal amplification process.

According to a second aspect, some embodiments of this application provide a multiple-input multiple-output antenna transceiver system, including a plurality of antenna transceiver modules, where at least one of the plurality of antenna transceiver modules is the antenna transceiver module described in any one of the foregoing technical solutions.

The multiple-input multiple-output antenna transceiver system provided in this embodiment of this application includes the antenna transceiver module described in any one of the foregoing technical solutions. Therefore, the multiple-input multiple-output antenna transceiver system provided in this embodiment of this application and the antenna transceiver module described in any one of the foregoing technical solutions can resolve a same technical problem, and achieve a same expected effect.

According to a third aspect, some embodiments of this application provide a base station, including the multiple-input multiple-output antenna transceiver system described in the foregoing technical solutions.

The base station provided in this embodiment of this application includes the multiple-input multiple-output antenna transceiver system described in the foregoing technical solutions. Therefore, the base station provided in this embodiment of this application and the multiple-input multiple-output antenna transceiver system described in any one of the foregoing technical solutions can resolve a same technical problem, and achieve a same expected effect.

### BRIEF DESCRIPTION OF DRAWINGS

FIG. 1 is a schematic diagram of a structure of a first multiple-input multiple-output antenna transceiver system;
FIG. 2 is a schematic diagram of a structure of an antenna transceiver module in the first multiple-input multiple-output antenna transceiver system shown in FIG. 1;
FIG. 3 is a schematic diagram of a structure of a second multiple-input multiple-output antenna transceiver system according to some embodiments of this application;
FIG. 4 is a first schematic diagram of a structure of a first antenna transceiver module in the second multiple-input multiple-output antenna transceiver system shown in FIG. 3;
FIG. 5 is a second schematic diagram of a structure of a first antenna transceiver module in the second multiple-input multiple-output antenna transceiver system shown in FIG. 3;
FIG. 6 is a third schematic diagram of a structure of a first antenna transceiver module in the second multiple-input multiple-output antenna transceiver system shown in FIG. 3;
FIG. 7 is a fourth schematic diagram of a structure of a first antenna transceiver module in the second multiple-input multiple-output antenna transceiver system shown in FIG. 3;
FIG. 8 is a fifth schematic diagram of a structure of a first antenna transceiver module in the second multiple-input multiple-output antenna transceiver system shown in FIG. 3;
FIG. 9 is a sixth schematic diagram of a structure of a first antenna transceiver module in the second multiple-input multiple-output antenna transceiver system shown in FIG. 3; and
FIG. 10 is a schematic diagram of a structure of a second antenna transceiver module in the second multiple-input multiple-output antenna transceiver system shown in FIG. 3.

### Reference numerals:

01-antenna transceiver module; 011-radio frequency transceiver; 0111-transmit chain; 0112-receive chain; 0113-circulator; 012-phase shifter; 013-antenna subarray; 100-processing circuit; 1-first antenna transceiver module; 11-transmit chain; 111-main chain; 112-branch chain; 112a- parent branch; 112b-child branch; 1121-phase shifter; 1122-power amplifier; 12-receive chain; 121-low noise amplifier; 113-duplexer; 14-antenna subarray; 141-antenna; 14a-antenna array; 2-second antenna transceiver module; 21-transmit chain; 211-power amplifier; 22-receive chain; 221-low noise amplifier; 23-duplexer; 24-antenna subarray.

### DESCRIPTION OF EMBODIMENTS

The following describes technical solutions in embodiments of this application with reference to accompanying drawings in embodiments of this application. It is clear that the described embodiments are merely some but not all of embodiments of this application.

The terms "first" and "second" in embodiments of this application are merely intended for a purpose of description, and shall not be understood as an indication or implication of relative importance or implicit indication of a quantity of indicated technical features. Therefore, a feature limited by "first" or "second" may explicitly indicate or implicitly include one or more such features.

In embodiments of this application, the term "connection" refers to coupling, including direct connection or indirect connection through another component to implement electrical connection.

Embodiments of this application relate to an antenna transceiver module, a multiple-input multiple-output antenna transceiver system, and a base station. The following briefly describes concepts in the embodiments of this application.

User equipment (user equipment, UE) is an important concept in mobile communications, and includes a mobile phone, an intelligent terminal, a multimedia device, a streaming media device, and the like.

A sounding reference signal (Sounding Reference Signal, SRS) is an uplink reference signal, and can be used for channel quality estimation.

Channel quality estimation is a calculation process in which a base station receives an SRS within a coverage area of the base station, and estimates an optimal downlink channel based on signal strength of the received SRS.

A base station is a radio reception and transmission station for exchanging information with user equipment through a mobile switching center within a radio coverage area. A radio transmission speed increases with application of fifth-generation mobile communications technologies (5th generation mobile networks, 5G). Because a 5G signal frequency band is relatively high and the loss is relatively large, a coverage capability of a base station is relatively weak. To ensure a coverage capability of a base station, the base station needs to use a large-scale massive multiple-input multiple-output (massive multiple input multiple output, Massive MIMO) system to obtain a beamforming gain and improve the coverage capability of the base station. However, there are a relatively large quantity of radio frequency transceivers TRx in the massive MIMO system. This causes an increase in the cost of the base station.

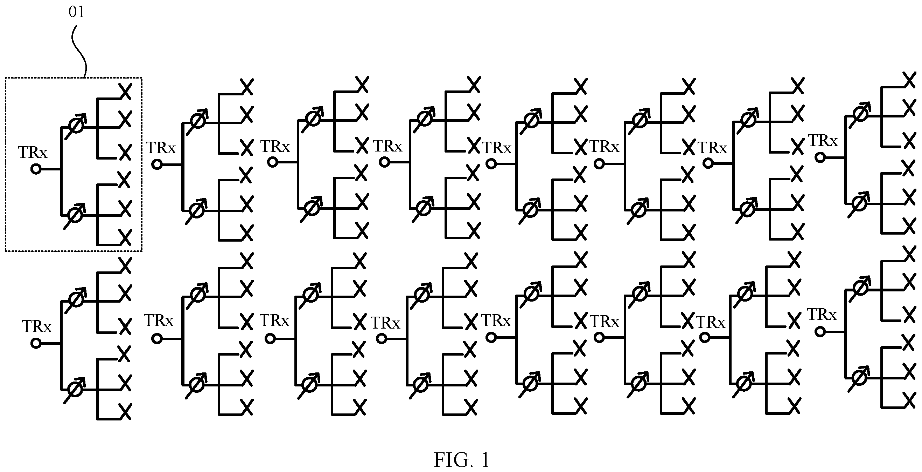

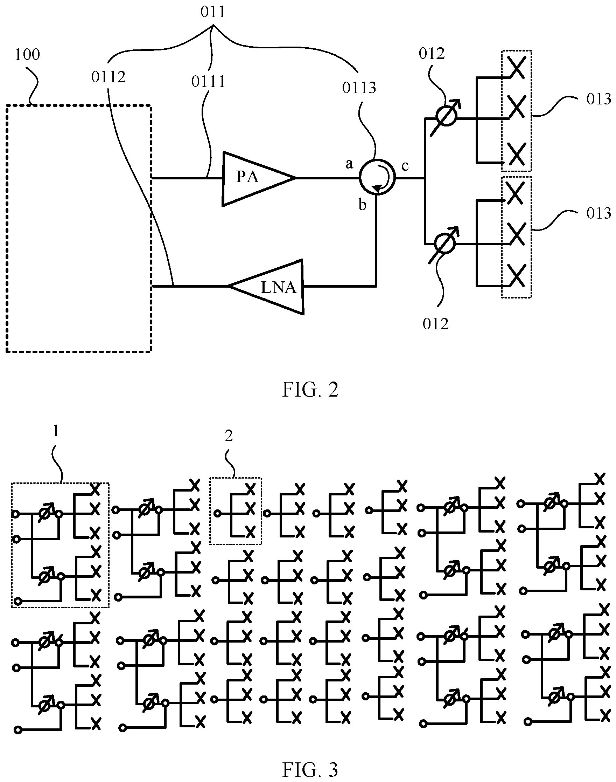

To reduce the cost of the base station, a massive MIMO system is provided according to some embodiments of this application, as shown in FIG. 1. The massive MIMO system includes a plurality of antenna transceiver modules 01. For a schematic diagram of a structure of the antenna transceiver module 01, refer to FIG. 2. As shown in FIG. 2, the antenna transceiver module 01 includes a radio frequency transceiver TRx 011, a plurality of phase shifters 012, and a plurality of antenna subarrays 013. The radio frequency transceiver 011 includes a transmit chain 0111, a receive chain 0112, and a circulator 0113. A back end of the radio frequency transceiver 011 can be connected to a processing circuit 100 configured to generate a transmit signal or process a receive signal. The transmit chain 0111 is a transmitter Tx. The transmit chain 0111 is configured to receive a transmit signal from the back-end processing circuit 100, process the transmit signal, and transmit the transmit signal to the plurality of antenna subarrays 013 through the circulator 0113. The receive chain 0112 is a receiver Rx and is configured to process receive signals received by the plurality of antenna subarrays 013 and transmit the signals to the back-end processing circuit 100. An output end of the transmit chain 0111 is connected to a first end a of the circulator 0113. The circulator 0113 can couple an input signal of the first end a to a third end c for output. An input end of the receive chain 0112 is connected to a second end b of the circulator 0113. The circulator 0113 can couple an input signal of the third end c to the second end b for output. The third end c of the circulator 0113 is connected to the plurality of antenna subarrays 013, and the phase shifter 012 is connected in series to a connection circuit between the third end c of the circulator 0113 and each antenna subarray 013 of the plurality of antenna subarrays 013. By using the plurality of phase shifters 012, time division sweeping of a narrow beam output by the Massive MIMO system can be implemented within a specific range, thereby ensuring the coverage capability of the base station. In addition, one radio frequency transceiver TRx is configured to receive and send signals of the plurality of antenna subarrays, so that a quantity of radio frequency transceivers TRx disposed in the massive MIMO system can be reduced, which reduces the base station cost. However, because the massive MIMO system shown in FIG. 1 receives a plurality of SRSs through time division sweeping of the narrow beam within a coverage area, all SRSs can be received only after sweeping in one periodicity is completed, and all SRSs cannot be simultaneously obtained at one moment. Consequently, channel quality estimation duration is relatively long and a response speed for the user equipment to obtain required information is relatively slow. In addition, in a process in which the massive MIMO system performs narrow beam sweeping in one periodicity, the user equipment continuously sends SRSs to the base station. Therefore, SRS resources are occupied, and downlink performance of the base station is degraded.

To control the cost of the base station, shorten channel quality estimation duration and save SRS resources, some embodiments of this application provide a base station. The base station can be a base station in a 5G network.

The base station includes a multiple-input multiple-output antenna transceiver system. FIG. 3 is a schematic diagram of a structure of the multiple-input multiple-output antenna transceiver system according to some embodiments of this application. As shown in FIG. 3, the multiple-input multiple-output antenna transceiver system includes a plurality of antenna transceiver modules, at least one of which is a first antenna transceiver module 1.

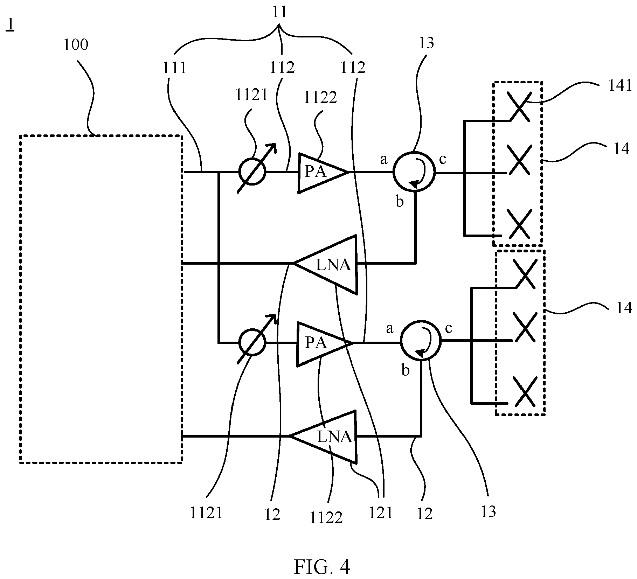

FIG. 4 is a schematic diagram of a structure of a first antenna transceiver module 1 according to some embodiments of this application. As shown in FIG. 4, the first antenna transceiver module 1 includes a transmit chain 11, and the transmit chain 11 is a transmitter Tx.

The transmit chain 11 includes a main chain 111 and a plurality of branch chains 112. The main chain 11 has an input end and an output end. The input end of the main chain 11 is configured to connect to a processing circuit 100. The processing circuit 100 may include a processor or a necessary logic circuit, configured to perform baseband signal processing or digital signal processing. The processor may be a baseband processor, a digital signal processor, a microprocessor, a central processing unit, or the like. Optionally, the processing circuit 100 may be disposed outside the first antenna transceiver module 1. The processing circuit 100 can generate a transmit signal. The main chain 11 is configured to receive the transmit signal from the processing circuit 100, process the transmit signal, and output the processed transmit signal from the output end of the main chain 11. Each branch chain 112 of the plurality of branch chains 112 has an input end and at least one output end. The input ends of the plurality of branch chains 112 are connected to the output end of the main chain 111, and the output end of each branch chain is configured to connect to a duplexer. Each branch chain 112 of the plurality of branch chains 112 is configured to receive a transmit signal from the output end of the main chain 111, process the transmit signal, transmit the processed transmit signal to at least one duplexer, and further transmit the processed transmit signal to at least one antenna subarray through at least one duplexer. In this way, a transmit signal can be transmitted to a plurality of antenna subarrays through one transmitter Tx. The duplexer and the antenna subarray may be disposed outside the first antenna transceiver module 1. As shown in FIG. 4, at least one branch chain 112 of the plurality of branch chains 112 includes a phase shifter 1121.

In this way, time division sweeping of a narrow beam output by a multiple-input multiple-output antenna transceiver system can be implemented within a specific range by using the phase shifter 1121, thereby ensuring the coverage capability of the base station. In addition, using one transmitter Tx to transmit a transmit signal to the plurality of antenna subarrays can reduce the quantity of transmitters Tx disposed in a multiple-input multiple-output antenna transceiver system to control the cost of a base station.

As shown in FIG. 4, the first antenna transceiver module further includes a plurality of receive chains 12, and the receive chain 12 is a receiver Rx.

A quantity of the plurality of receive chains 12 is equal to a quantity of all output ends of the plurality of branch chains 112. Each receive chain 12 of the plurality of receive chains 12 has an input end and an output end. The input ends of the plurality of receive chains 12 are in a one-to-one correspondence with all the output ends of the plurality of branch chains 112, and the input end of each receive chain 12 of the plurality of receive chains 12 is configured to connect to a duplexer connected to an output end of a branch chain 112 corresponding to the input end of a receive chain 12. An output end of each receive chain 12 of the plurality of receive chains 12 is configured to connect to the processing circuit 100, each receive chain 12 of the plurality of receive chains 12 is configured to receive a signal from the duplexer, process the received signal, and transmit the processed received signal to the processing circuit 100, and the processing circuit 100 can process the received signal.

In this way, receive signals of all duplexers may be obtained at a time by using the plurality of receive chains 12, so that all SRSs within the coverage area of the base station can be obtained at a time, thereby shortening channel quality estimation duration, and improving a response speed of obtaining required information by user equipment. In addition, user equipment needs to send an SRS to the base station through the uplink channel only once, so that SRS resources are saved, and downlink performance of the base station is improved.

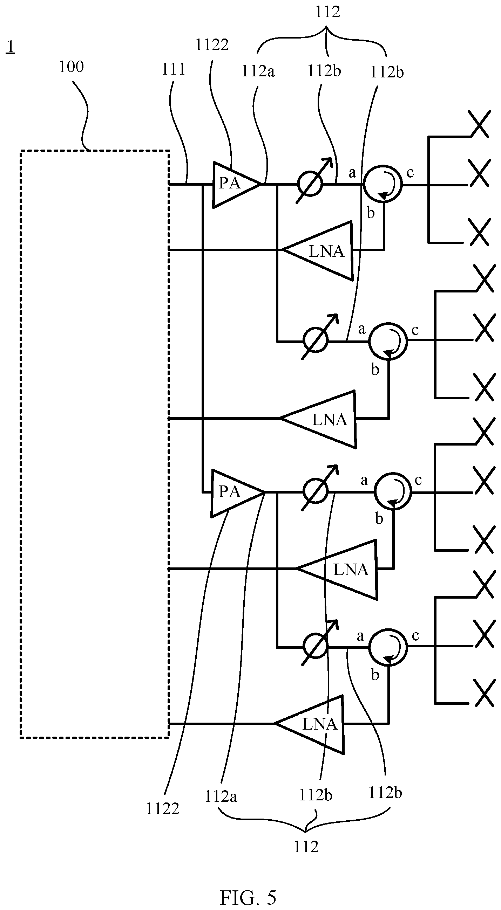

It should be noted that, all the output ends of the plurality of branch chains 112 refer to a set of the output ends of the plurality of branch chains 112, and a quantity of all the output ends of the plurality of branch chains 112 is a quantity of the output ends in the set. For example, as shown in FIG. 5, when a quantity of the plurality of branch chains 112 is two, and each branch chain 112 has two output ends, all output ends of the plurality of branch chains 112 are a set of four output ends, and a quantity of all output ends of the plurality of branch chains 112 is four.

In some embodiments, as shown in FIG. 4, the first antenna transceiver module 1 further includes a plurality of duplexers 13. The duplexer 13 includes but is not limited to a single-pole multi-throw switch, a circulator, or a filter.

A quantity of the plurality of duplexers 13 is equal to a quantity of all the output ends of the plurality of branch chains 112, and the plurality of duplexers 13 are in a one-to-one correspondence with all the output ends of the plurality of branch chains 112. Each duplexer 13 of the plurality of duplexers 13 includes a first end a, a second end b, and a third end c. The duplexer 13 is configured to couple a signal input from the first end a to the third end c for output, and couple a signal input from the third end c to the second end b for output. The first end a of each duplexer 13 of the plurality of duplexers 13 is connected to an output end of the branch chain 112 corresponding to the duplexer 13; the second end b of each duplexer 13 of the plurality of duplexers 13 is connected to an input end of the receive chain 12 corresponding to the output end of the branch chain 112 corresponding to the duplexer 13; the third end c of each duplexer 13 of the plurality of duplexers 13 is configured to connect to an antenna subarray.

In some embodiments, as shown in FIG. 4, the first antenna transceiver module 1 further includes a plurality of antenna subarrays 14. A quantity of the plurality of antenna subarrays 14 is equal to the quantity of the plurality of duplexers 13. The plurality of antenna subarrays 14 are in a one-to-one correspondence with the plurality of duplexers 13. Each antenna subarray 14 of the plurality of antenna subarrays 14 includes at least two antennas 141. Each antenna subarray 14 of the plurality of antenna subarrays 14 is connected to the third end c of the duplexer 13 corresponding to the antenna subarray 14.

In the foregoing embodiment, a quantity of antennas 141 included in an antenna subarray 14 may be two, three, or more.

This is not limited herein. Specifically, the quantity of antennas 141 may be designed according to a quantity of antennas in a multiple-input multiple-output antenna transceiver system and a required coverage range of a base station.

It should be noted that, that each antenna subarray 14 of the plurality of antenna subarrays 14 is connected to the third end c of the duplexer 13 corresponding to the antenna subarray 14 means that each antenna 141 in each antenna subarray 14 of the plurality of antenna subarrays 14 is connected to the third end c of the duplexer 13 corresponding to the antenna subarray 14.

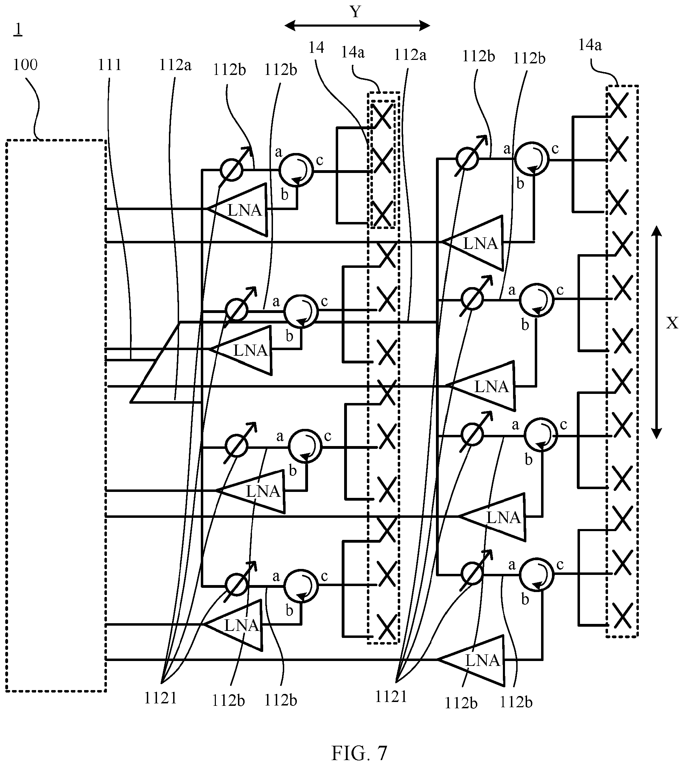

The plurality of antenna subarrays 14 may be arranged in a row (as shown in FIG. 4, FIG. 5, or FIG. 6), or may be disposed in an array (as shown in FIG. 7, FIG. 8, or FIG. 9). This is not specifically limited herein.

The branch chain 112 may have one output end, or may have a plurality of output ends. Specifically, a structure of the branch chain 112 may include the following two embodiments:
In Embodiment 1, as shown in FIG. 4, each branch chain 112 of the plurality of branch chains 112 has one output end. In this way, the quantity of the plurality of branch chains 112 is equal to the quantity of all output ends of the plurality of branch chains 112. This structure is simple, and each antenna subarray can be separately controlled.

In the foregoing embodiment, a phase shifter 1121 may be included in only one branch chain 112 or each branch chain 112 of the plurality of branch chains 112, which is not specifically limited herein.

To expand the coverage area of the base station, in some embodiments, as shown in FIG. 4, each branch chain 112 of the plurality of branch chains 112 includes a phase shifter 1121, or all branch chains 112 except one branch chain 112 of the plurality of branch chains 112 include a phase shifter 1121. In this way, the plurality of branch chains 112 may separately perform phase adjustment on a transmit signal, the adjustment flexibility is relatively high and the coverage area of the base station can be enlarged.

It should be noted that, when all branch chains 112 except one branch chain 112 of the plurality of branch chains 112 include the phase shifter 1121, a phase of a transmit signal on the branch chain 112 that does not include the phase shifter 1121 may be used as a reference. The reference phase may be changed through generating transmit signals with different phases by the processing circuit 100.

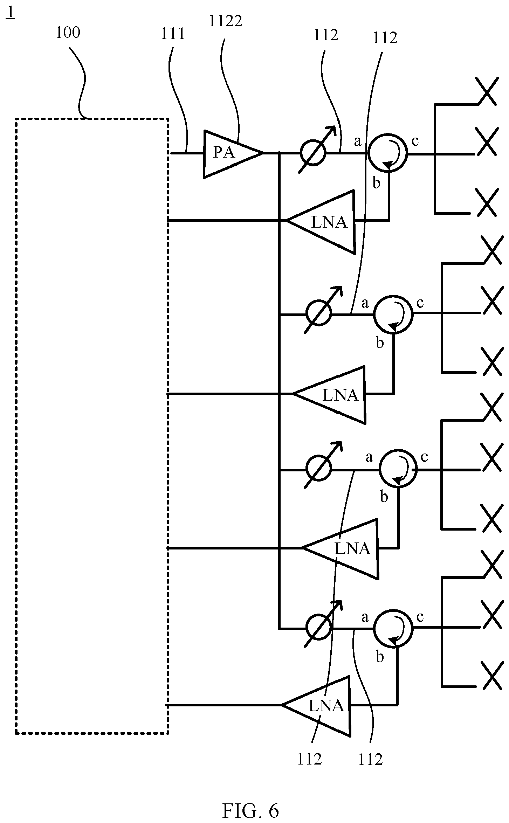

When each branch chain 112 of the plurality of branch chains 112 has an output end, in some embodiments, as shown in FIG. 4 or FIG. 6, a plurality of antenna subarrays 14 connected to all the output ends of the plurality of branch chains 112 may be arranged in a row. In this way, sweeping of a narrow beam output by the multiple-input multiple-output antenna transceiver system can be implemented in an arrangement direction of the plurality of antenna subarrays. The plurality of antenna subarrays 14 may be arranged in a row in a horizontal direction, or may be arranged in a column in a vertical direction. This is not specifically limited herein.

In Embodiment 2, as shown in FIG. 5, each branch chain 112 of a plurality of branch chains 112 includes a parent branch 112a and a plurality of child branches 112b. The parent branch 112a and each child branch 112b of the plurality of child branches 112b each have an input end and an output end. The input end of the parent branch 112a is an input end of the branch chain 112, and the output end of the parent branch 112a is connected to input ends of the plurality of child branches 112b. The output end of the child branch 112b is an output end of the branch chain 112. In this way, each branch chain 112 of the plurality of branch chains 112 has a plurality of output ends. A quantity of the plurality of branch chains 112 is less than a quantity of all output ends of the plurality of branch chains 112, and more antenna subarrays may be connected. On a premise that a quantity of antennas in a multiple-input multiple-output antenna system is fixed, a quantity of transmitters Tx may be further reduced, which may further reduce the cost of the base station.

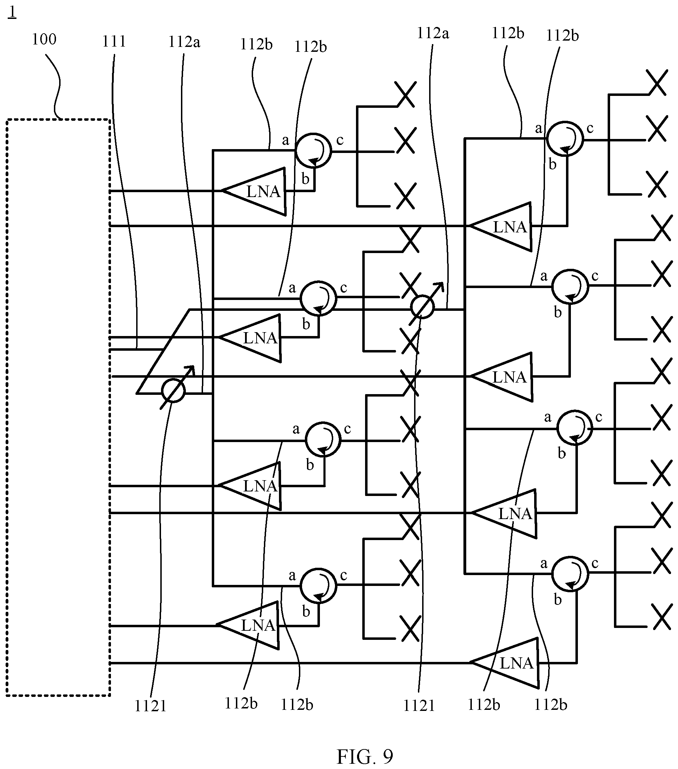

In the foregoing embodiment, a phase shifter 1121 may be included in only one branch chain 112 or each branch chain 112 of the plurality of branch chains 112, which is not specifically limited herein. When the branch chain 112 includes a phase shifter 1121, specifically, the phase shifter 1121 may be included in the parent branch 112a of the branch chain 112 (as shown in FIG. 9), or the phase shifter 1121 may be included in the child branch 112b of the branch chain 112. This is not specifically limited herein.

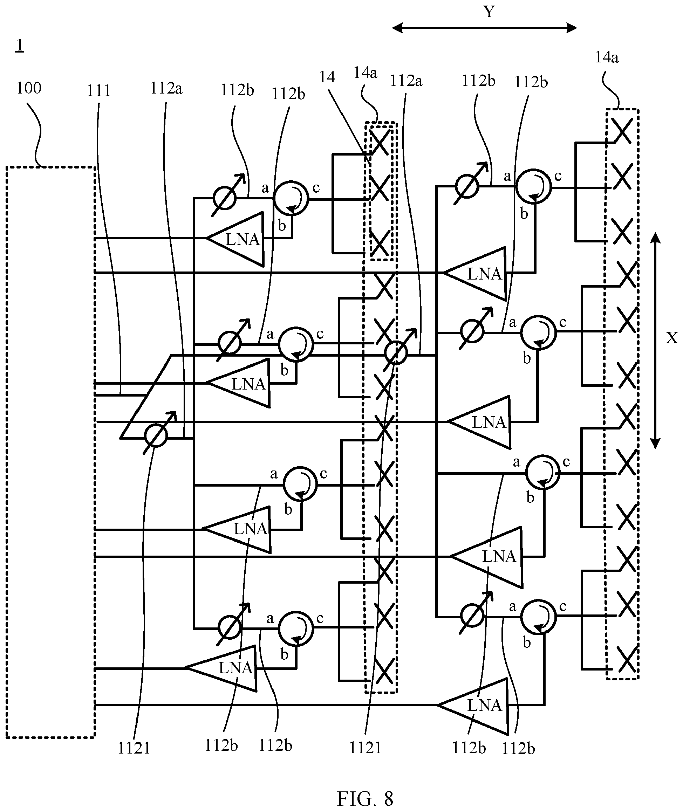

To expand the coverage area of the base station, in some embodiments, as shown in FIG. 7, each child branches 112b of the plurality of child branches 112b includes a phase shifter 1121; or, as shown in FIG. 8, the parent branch 112a includes a phase shifter 1121 and each child branches 112b of the plurality of child branches 112b except one child branch 112b includes a phase shifter 1121. In this way, phase adjustment can be separately performed on transmit signals output by each output end of the plurality of output ends of the plurality of branch chains 112, the adjustment flexibility is relatively high, and the coverage area of the base station can be enlarged.

It should be noted that, when the parent branch 112a includes a phase shifter 1121, and each child branch 112b of the child branches 112b except one child branch 112b of the plurality of child branches 112b includes a phase shifter 1121, phase adjustment is performed twice sequentially by the phase shifters 1121 included in the parent branch 112a and the phase shifter 1121 included in the child branch 112b on a transmit signal output by the output end of the child branch 112b that includes the phase shifter 1121, while phase adjustment is performed only once by the phase shifter 1121 included in the parent branch 112a on a transmit signal output by an output end of the child branch 112b that does not include the phase shifter 1121.

When each branch chain 112 of the plurality of branch chains 112 has a plurality of output ends, in some embodiments, as shown in FIG. 5, a plurality of antenna subarrays 14 connected to all the output ends of the plurality of branch chains 112 may be arranged in a row, or may be arranged in an array. This is not specifically limited herein. In some embodiments, as shown in FIG. 7 or FIG. 8, a plurality of antenna subarrays 14 connected to each branch chain 112 of the plurality of branch chains 112 are arranged into one antenna array 14a along a first direction (that is, a direction X in FIG. 7 or FIG. 8). The antenna arrays 14a connected to the plurality of branch chains 112 are arranged in a second direction (that is, a direction Y in FIG. 7 or FIG. 8). The first direction is perpendicular to the second direction. In this way, sweeping of a narrow beam output by the multiple-input multiple-output antenna transceiver system can be implemented in both the first direction and the second direction. The first direction may be a horizontal direction, or may be a vertical direction. This is not specifically limited herein.

In some embodiments, the transmit chain 11 includes an up-conversion frequency mixer. The up-conversion frequency mixer is also referred to as a modulator. The up-conversion frequency mixer is configured to convert a frequency of a transmit signal transmitted through the transmit chain 11 from a first frequency to a second frequency. The first frequency is lower than the second frequency. To enable frequencies of transmit signals transmitted to all output ends of the branch chains 112 to be the second frequency, the main chain 111 of the transmit chain 11 may include an up-conversion frequency mixer, or each branch chain 112 of the plurality of branch chains 112 may include an up-conversion frequency mixer. This is not specifically limited herein. However, to reduce costs, in some embodiments, the up-conversion frequency mixer is included in the main chain 111 of the transmit chain 11. In this way, frequencies of transmit signals transmitted to all output ends of the branch chains 112 may be the second frequency, and a relatively small quantity of up-conversion frequency mixers are disposed on the transmit chain 11, which makes a cost of the first antenna transceiver module 1 relatively low.

The transmit chain 11 further includes a power amplifier (power amplifier, PA) 1122. The power amplifier 1122 is configured to amplify power of transmit signals that are transmitted to all the output ends of the plurality of branch chains 112. In order to achieve this objective, the main chain 111 of the transmit chain 11 may include a power amplifier 1122 (as shown in FIG. 6), or each branch chain 112 of the plurality of branch chains 112 may include a power amplifier 1122 (as shown in FIG. 4). This is not specifically limited herein.

In some embodiments, as shown in FIG. 4, each branch chain 112 of the plurality of branch chains 112 includes the power amplifier 1122. When the branch chain 112 includes a phase shifter 1121, an input end of the power amplifier 1122 in the branch chain 112 is connected to an output end of the phase shifter 1121. In this way, in the branch chain 112, a transmit signal first passes through the phase shifter 1121, and then passes through the power amplifier 1122. The transmit signal is not affected by insertion loss of the phase shifter 1121. In this way, on the premise that the transmit power is fixed, the strength of the transmit signal can be improved, and the downlink coverage capability of the base station can be improved; or, on the premise that the coverage capability of the base station is fixed, the transmit power of the transmit signal can be reduced, thereby reducing power consumption.

In some embodiments, the receive chain 12 includes a down-conversion frequency mixer, also referred to as a demodulator. The down-conversion frequency mixer is configured to convert a frequency of a receive signal transmitted in the receive chain 12 from a third frequency to a fourth frequency. The third frequency is higher than the fourth frequency.

In some embodiments, as shown in FIG. 4, each receive chain 12 of the receive chains 12 includes a low noise amplifier (low noise amplifier, LNA) 121. The LNA can amplify a weak signal received by an antenna, and reduce noise interference in a signal amplification process.

Some or all of the plurality of antenna transceiver modules included in the multiple-input multiple-output antenna transceiver system may be the first antenna transceiver modules 1, which is not specifically limited herein.

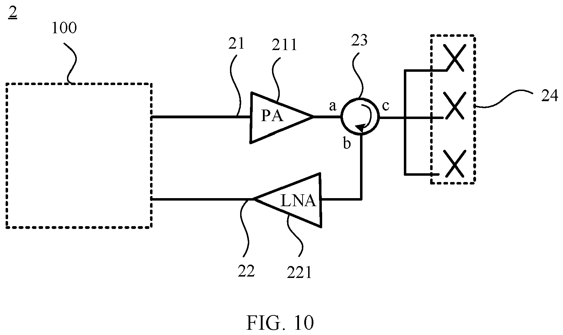

Some embodiments of this application further provide a second antenna transceiver module 2. As shown in FIG. 10, the second antenna transceiver module 2 includes a transmit chain 21, a receive chain 22, a duplexer 23, and an antenna subarray 24. The transmit chain 21 includes an up-conversion frequency mixer and a power amplifier 211. An input end of the transmit chain 21 is connected to a processing circuit 100, and an output end of the transmit chain 21 is connected to a first end a of the duplexer 23. The duplexer 23 can couple an input signal of the first end a to a third end c for output. The receive chain 22 includes a down-conversion frequency mixer and a low noise amplifier 221. An input end of the receive chain 22 is connected to a second end b of the duplexer 23, and an output end of the receive chain 22 is connected to the processing circuit 100. The duplexer 23 can couple an input signal of the third end c to the second end b for output. The third end c of the duplexer 23 is connected to the antenna subarray 24, and the antenna subarray 24 includes at least one antenna.

When the plurality of antenna transceiver modules included in the multiple-input multiple-output antenna transceiver system are all the first antenna transceiver modules 1, a quantity of transmitters Tx may be reduced as much as possible, thereby saving the cost of the base station. However, because the quantity of transmitters Tx is reduced, the downlink capacity of the base station is reduced. When the plurality of antenna transceiver modules included in the multiple-input multiple-output antenna transceiver system are all the second antenna transceiver modules 2, a quantity of transmitters Tx may be increased, and the downlink capacity of the base station may be increased. However, the cost of the base station is relatively high. To balance both the cost of the base station and the transmit capacity of the base station, in some embodiments, as shown in FIG. 3, the multiple-input multiple-output antenna transceiver system includes N antenna transceiver modules, and M antenna transceiver modules of the N antenna transceiver modules are the first antenna transceiver modules 1, where 1≤M<N, and the remaining N-M antenna transmission receiver modules are the second antenna transmission receiver modules 2 shown in FIG. 10. In this way, the multiple-input multiple-output antenna transmission receiver system includes two types of antenna transmission receiver modules: the first antenna transmission receiver module 1 and the second antenna transmission receiver module 2, which can balance both the base station cost and the transmit capacity of the base station.

In the descriptions of this specification, the specific features, structures, materials, or characteristics may be combined in an appropriate manner in any one or more of the embodiments or examples.

Finally, it should be noted that the foregoing embodiments are merely intended for describing the technical solutions of this application, but not for limiting this application.

## Claims

1. An antenna transceiver module (1), comprising:
a transmit chain (11), comprising a main chain (111) and a plurality of branch chains (112), wherein the main chain has an input end and an output end, each branch chain of the plurality of branch chains has an input end and at least one output end, the input ends of the plurality of branch chains are connected to the output end of the main chain, the output end of each branch chain is configured to connect to a duplexer (113), and at least one branch chain of the plurality of branch chains comprises a phase shifter;
a plurality of receive chains (12), wherein a quantity of the plurality of receive chains is equal to a quantity of all output ends of the plurality of branch chains, each receive chain of the plurality of receive chains has an input end and an output end, the input ends of the plurality of receive chains are in a one-to-one correspondence with all the output ends of the plurality of branch chains, and the input end of each receive chain of the plurality of receive chains is configured to connect to the duplexer connected to the output end of the branch chain corresponding to the input end of the receive chain,
a plurality of duplexers (113), wherein a quantity of the plurality of duplexers is equal to the quantity of all the output ends of the plurality of branch chains, the plurality of duplexers are in a one-to-one correspondence with all the output ends of the plurality of branch chains, each duplexer of the plurality of duplexers comprises a first end (a),
a second end (b) and a third end (c), each duplexer of the plurality of duplexers is configured to couple a signal that is input from the first end to the third end for output, and couple a signal that is input from the third end to the second end for output, wherein the first end of each duplexer of the plurality of duplexers is connected to the output end of the branch chain corresponding to the duplexer, the second end of each duplexer of the plurality of duplexers is connected to the input end of the receive chain corresponding to the output end of the branch chain corresponding to the duplexer, and the third end of each duplexer of the plurality of duplexers is connected to a corresponding antenna subarray, **characterized in that**
the antenna transceiver module further comprises:
a plurality of antenna subarrays (14), wherein a quantity of the plurality of antenna subarrays is equal to the quantity of the plurality of duplexers, the plurality of antenna subarrays are in a one-to-one correspondence with the plurality of duplexers, each antenna subarray of the plurality of antenna subarrays comprises at least two antennas (141), and each antenna subarray of the plurality of antenna subarrays is connected to the third end of the duplexer corresponding to the antenna subarray.

2. The antenna transceiver module according to claim 1, wherein
each branch chain in the plurality of branch chains has one output end.

3. The antenna transceiver module according to claim 2, wherein
the plurality of antenna subarrays is arranged in a row.

4. The antenna transceiver module according to claim 2 or 3, wherein
each branch chain of the plurality of branch chains comprises a phase shifter (1121), or all branch chains except one branch chain of the plurality of branch chains comprise a phase shifter (1121).

5. The antenna transceiver module according to claim 1, wherein each branch chain of a plurality of branch chains comprises a parent branch (112a) and a plurality of child branches (112b), the parent branch and each child branch of the plurality of child branches each have an input end and an output end, the input end of the parent branch is the input end of the branch chain, the output end of the parent branch is connected to the input ends of the plurality of child branches, and the output end of the child branch is the output end of the branch chain.

6. The antenna transceiver module according to claim 5, wherein the plurality of antenna subarrays connected to each branch chain of the plurality of branch chains are arranged into one antenna array (14a) along a first direction (X), the antenna arrays connected to the plurality of branch chains are arranged along a second direction (Y), and the first direction is perpendicular to the second direction.

7. The antenna transceiver module according to claim 5 or 6, wherein each child branch of the plurality of child branches comprises a phase shifter (1121), or the parent branch comprises a phase shifter (1121), and all child branches except one child branch in the plurality of child branches comprise a phase shifter (1121).

8. The antenna transceiver module according to any one of claims 1 to 7, wherein each branch chain of the plurality of branch chains comprises a power amplifier (1122);
when the branch chain comprises the phase shifter, an input end of the power amplifier in the branch chain is connected to an output end of the phase shifter.

9. A multiple-input multiple-output antenna transceiver system, comprising a plurality of antenna transceiver modules, wherein at least one of the plurality of antenna transceiver modules is the antenna transceiver module according to any one of claims 1 to 8.

10. A base station, comprising the multiple-input multiple-output antenna transceiver system according to claim 9.

## Patentansprüche

1. Antennen-Sendeempfänger-Modul (1), umfassend:
eine Übertragungskette (11), die eine Hauptkette (111) und eine Mehrzahl von Zweigketten (112) umfasst, wobei die Hauptkette ein Eingangsende und ein Ausgangsende aufweist, jede Zweigkette der Mehrzahl von Zweigketten ein Eingangsende und mindestens ein Ausgangsende aufweist, die Eingangsenden der Mehrzahl von Zweigketten mit dem Ausgangsende der Hauptkette verbunden sind, das Ausgangsende jeder Zweigkette dazu konfiguriert ist, mit einem Duplexer (113) verbunden zu sein, und mindestens eine Zweigkette der Mehrzahl von Zweigketten einen Phasenschieber umfasst,
eine Mehrzahl von Empfangsketten (12), wobei eine Anzahl der Mehrzahl von Empfangsketten gleich einer Anzahl aller Ausgangsenden der Mehrzahl von Zweigketten ist, jede Empfangskette der Mehrzahl von Empfangsketten ein Eingangsende und ein Ausgangsende aufweist, die Eingangsenden der Mehrzahl von Empfangsketten in einer Eins-zu-Eins-Entsprechung mit allen Ausgangsenden der Mehrzahl von Zweigketten stehen, und das Eingangsende jeder Empfangskette der Mehrzahl von Empfangsketten dazu konfiguriert ist, mit dem Duplexer verbunden zu sein, der mit dem Ausgangsende der Zweigkette verbunden ist, das dem Eingangsende der Empfangskette entspricht,
eine Mehrzahl von Duplexern (113), wobei eine Anzahl der Mehrzahl von Duplexern gleich der Anzahl aller Ausgangsenden der Mehrzahl von Zweigketten ist, die Mehrzahl von Duplexern in einer Eins-zu-Eins-Entsprechung mit allen Ausgangsenden der Mehrzahl von Zweigketten stehen, jeder Duplexer der Mehrzahl von Duplexern ein erstes Ende (a), ein zweites Ende (b) und ein drittes Ende (c) umfasst, jeder Duplexer der Mehrzahl von Duplexern dazu konfiguriert ist, ein von dem ersten Ende eingegebenes Signal zu dem dritten Ende zur Ausgabe zu koppeln und ein von dem dritten Ende eingegebenes Signal zu dem zweiten Ende zur Ausgabe zu koppeln, wobei das erste Ende jedes Duplexers der Mehrzahl von Duplexern mit dem Ausgangsende der Zweigkette verbunden ist, die dem Duplexer entspricht, das zweite Ende jedes Duplexers der Mehrzahl von Duplexern mit dem Eingangsende der Empfangskette verbunden ist, das dem Ausgangsende der Zweigkette entspricht, die dem Duplexer entspricht, und das dritte Ende jedes Duplexers der Mehrzahl von Duplexern mit einer entsprechenden Antennenuntergruppe verbunden ist, **dadurch gekennzeichnet, dass**
das Antennen-Sendeempfänger-Modul ferner Folgendes umfasst:
eine Mehrzahl von Antennenuntergruppen (14), wobei eine Anzahl der Mehrzahl von Antennenuntergruppen gleich der Anzahl der Mehrzahl von Duplexern ist, die Mehrzahl von Antennenuntergruppen in einer Eins-zu-Eins-Entsprechung mit der Mehrzahl von Duplexern steht, jede Antennenuntergruppe der Mehrzahl von Antennenuntergruppen mindestens zwei Antennen (141) umfasst, und jede Antennenuntergruppe der Mehrzahl von Antennenuntergruppen mit dem dritten Ende des Duplexers verbunden ist, der der Antennenuntergruppe entspricht.

2. Antennen-Sendeempfänger-Modul nach Anspruch 1, wobei
jede Zweigkette in der Mehrzahl von Zweigketten ein Ausgangsende aufweist.

3. Antennen-Sendeempfänger-Modul nach Anspruch 2, wobei
die Mehrzahl von Antennenuntergruppen in einer Reihe angeordnet ist.

4. Antennen-Sendeempfänger-Modul nach Anspruch 2 oder 3, wobei jede Zweigkette der Mehrzahl von Zweigketten einen Phasenschieber (1121) umfasst, oder alle Zweigketten außer einer Zweigkette der Mehrzahl von Zweigketten einen Phasenschieber (1121) umfassen.

5. Antennen-Sendeempfänger-Modul nach Anspruch 1, wobei jede Zweigkette einer Mehrzahl von Zweigketten einen übergeordneten Zweig (112a) und eine Mehrzahl von untergeordneten Zweigen (112b) umfasst, der übergeordnete Zweig und jeder untergeordnete Zweig der Mehrzahl von untergeordneten Zweigen jeweils ein Eingangsende und ein Ausgangsende aufweisen, das Eingangsende des übergeordneten Zweigs das Eingangsende der Zweigkette ist, das Ausgangsende des übergeordneten Zweigs mit den Eingangsenden der Mehrzahl von untergeordneten Zweigen verbunden ist, und das Ausgangsende des untergeordneten Zweigs das Ausgangsende der Zweigkette ist.

6. Antennen-Sendeempfänger-Modul nach Anspruch 5, wobei die Mehrzahl von Antennenuntergruppen, die mit jeder Zweigkette der Mehrzahl von Zweigketten verbunden sind, in einer Antennengruppe (14a) entlang einer ersten Richtung (X) angeordnet sind, die Antennengruppen, die mit der Mehrzahl von Zweigketten verbunden sind, entlang einer zweiten Richtung (Y) angeordnet sind, und die erste Richtung senkrecht zu der zweiten Richtung ist.

7. Antennen-Sendeempfänger-Modul nach Anspruch 5 oder 6, wobei jeder untergeordnete Zweig der Mehrzahl von untergeordneten Zweigen einen Phasenschieber (1121) umfasst, oder der übergeordnete Zweig einen Phasenschieber (1121) umfasst, und alle untergeordneten Zweige außer einem untergeordneten Zweig in der Mehrzahl von untergeordneten Zweigen einen Phasenschieber (1121) umfassen.

8. Antennen-Sendeempfänger-Modul nach einem der Ansprüche 1 bis 7, wobei jede Zweigkette der Mehrzahl von Zweigketten einen Leistungsverstärker (1122) umfasst, wobei, wenn die Zweigkette den Phasenschieber umfasst, ein Eingangsende des Leistungsverstärkers in der Zweigkette mit einem Ausgangsende des Phasenschiebers verbunden ist.

9. Mehrfacheingabe-Mehrfachausgabe-Antennen-Sendeempfänger-System, umfassend eine Mehrzahl von Antennen-Sendeempfänger-Modulen, wobei mindestens eines der Mehrzahl von Antennen-Sendeempfänger-Modulen das Antennen-Sendeempfänger-Modul nach einem der Ansprüche 1 bis 8 ist.

10. Basisstation, umfassend das Mehrfacheingabe-Mehrfachausgabe-Antennen-Sendeempfänger-System nach Anspruch 9.

## Revendications

1. Module émetteur-récepteur d'antenne (1), comprenant :
une chaîne d'émission (11), comprenant une chaîne principale (111) et une pluralité de chaînes de ramifications (112), la chaîne principale ayant une extrémité d'entrée et une extrémité de sortie, chaque chaîne de ramifications de la pluralité de chaînes de ramifications ayant une extrémité d'entrée et au moins une extrémité de sortie, les extrémités d'entrée de la pluralité de chaînes de ramifications étant connectées à l'extrémité de sortie de la chaîne principale, l'extrémité de sortie de chaque chaîne de ramifications étant configurée pour être connectée à un duplexeur (113), et au moins une chaîne de ramifications de la pluralité de chaînes de ramifications comprenant un déphaseur ;
une pluralité de chaînes de réception (12), un nombre de la pluralité de chaînes de réception étant égal à un nombre de toutes les extrémités de sortie de la pluralité de chaînes de ramifications, chaque chaîne de réception de la pluralité de chaînes de réception ayant une extrémité d'entrée et une extrémité de sortie, les extrémités d'entrée de la pluralité de chaînes de réception étant en correspondance biunivoque avec toutes les extrémités de sortie de la pluralité de chaînes de ramifications, et l'extrémité d'entrée de chaque chaîne de réception de la pluralité de chaînes de réception étant configurée pour être connectée au duplexeur connecté à l'extrémité de sortie de la chaîne de ramifications correspondant à l'extrémité d'entrée de la chaîne de réception ;
une pluralité de duplexeurs (113), un nombre de la pluralité de duplexeurs étant égal au nombre de toutes les extrémités de sortie de la pluralité de chaînes de ramifications, la pluralité de duplexeurs étant en correspondance biunivoque avec toutes les extrémités de sortie de la pluralité de chaînes de ramifications, chaque duplexeur de la pluralité de duplexeurs comprenant une première extrémité (a), une deuxième extrémité (b) et une troisième extrémité (c), chaque duplexeur de la pluralité de duplexeurs étant configuré pour coupler un signal qui est entré de la première extrémité à la troisième extrémité en vue d'être délivré en sortie et pour coupler un signal qui est entré de la troisième extrémité à la deuxième extrémité en vue d'être délivré en sortie, la première extrémité de chaque duplexeur de la pluralité de duplexeurs étant connectée à l'extrémité de sortie de la chaîne de ramifications correspondant au duplexeur, la deuxième extrémité de chaque duplexeur de la pluralité de duplexeurs étant connectée à l'extrémité d'entrée de la chaîne de réception correspondant à l'extrémité de sortie de la chaîne de ramifications correspondant au duplexeur, et la troisième extrémité de chaque duplexeur de la pluralité de duplexeurs étant connectée à un sous-réseau d'antennes correspondant,
le module émetteur-récepteur d'antenne étant **caractérisé en ce que** :
le module émetteur-récepteur d'antenne comprend en outre :
une pluralité de sous-réseaux d'antennes (14), un nombre de la pluralité de sous-réseaux d'antennes étant égal au nombre de la pluralité de duplexeurs, la pluralité de sous-réseaux d'antennes étant en correspondance biunivoque avec la pluralité de duplexeurs, chaque sous-réseau d'antennes de la pluralité de sous-réseaux d'antennes comprenant au moins deux antennes (141), et chaque sous-réseau d'antennes de la pluralité de sous-réseaux d'antennes étant connecté à la troisième extrémité du duplexeur correspondant au sous-réseau d'antennes.

2. Module émetteur-récepteur d'antenne selon la revendication 1, dans lequel chaque chaîne de ramifications de la pluralité de chaînes de ramifications a une extrémité de sortie.

3. Module émetteur-récepteur d'antenne selon la revendication 2, dans lequel la pluralité de sous-réseaux d'antennes est disposée en rangée.

4. Module émetteur-récepteur d'antenne selon la revendication 2 ou 3, dans lequel chaque chaîne de ramifications de la pluralité de chaînes de ramifications comprend un déphaseur (1121) ou dans lequel toutes les chaînes de ramifications à l'exception d'une chaîne de ramifications de la pluralité de chaînes de ramifications comprennent un déphaseur (1121).

5. Module émetteur-récepteur d'antenne selon la revendication 1, dans lequel chaque chaîne de ramifications d'une pluralité de chaînes de ramifications comprend une ramification mère (112a) et une pluralité de ramifications enfants (112b), la ramification mère et chaque ramification enfant de la pluralité de ramifications enfants ayant chacune une extrémité d'entrée et une extrémité de sortie, l'extrémité d'entrée de la ramification mère étant l'extrémité d'entrée de la chaîne de ramifications, l'extrémité de sortie de la ramification mère étant connectée aux extrémités d'entrée de la pluralité de ramifications enfants, et l'extrémité de sortie de la ramification enfant étant l'extrémité de sortie de la chaîne de ramifications.

6. Module émetteur-récepteur d'antenne selon la revendication 5, dans lequel la pluralité de sous-réseaux d'antennes connectés à chaque chaîne de ramifications de la pluralité de chaînes de ramifications sont agencés en un réseau d'antennes (14a) le long d'une première direction (X), les réseaux d'antennes connectés à la pluralité de chaînes de ramifications étant agencés le long d'une seconde direction (Y), et la première direction étant perpendiculaire à la seconde direction.

7. Module émetteur-récepteur d'antenne selon la revendication 5 ou 6, dans lequel chaque ramification enfant de la pluralité de ramifications enfants comprend un déphaseur (1121) ou dans lequel la ramification mère comprend un déphaseur (1121) et toutes les ramifications enfants à l'exception d'une ramification enfant de la pluralité de ramifications enfants comprennent un déphaseur (1121).

8. Module émetteur-récepteur d'antenne selon l'une quelconque des revendications 1 à 7, dans lequel chaque chaîne de ramifications de la pluralité de chaînes de ramifications comprend un amplificateur de puissance (1122) ;
lorsque la chaîne de ramifications comprend le déphaseur, une extrémité d'entrée de l'amplificateur de puissance dans la chaîne de ramifications étant connectée à une extrémité de sortie du déphaseur.

9. Système émetteur-récepteur d'antenne à entrées multiples et sorties multiples, comprenant une pluralité de modules émetteurs-récepteurs d'antenne, au moins un module émetteur-récepteur d'antenne de la pluralité de modules émetteurs-récepteurs d'antenne étant le module émetteur-récepteur d'antenne selon l'une quelconque des revendications 1 à 8.

10. Station de base, comprenant le système émetteur-récepteur d'antenne à entrées multiples et sorties multiples selon la revendication 9.
